# EUROPÄISCHE PATENTSCHRIFT

(11) **EP 1 341 632 B1**
(45) Veröffentlichungstag und Bekanntmachung des Hinweises auf die Patenterteilung: **14.06.2006**
(21) Anmeldenummer: 01974029.9
(22) Anmeldetag: 07.09.2001
(51) Int. Cl.: B23D 45/16, B27B 5/32, B27B 5/34

(54) **HANDWERKZEUGMASCHINE MIT ZWEI UMITTELBAR ANEINANDER VORBEIDREHENDEN, GEGENLÄUFIG ROTIERENDEN TRENNSCHEIBEN UND MITTELN ZUM AUFSPANNEN DER TRENNSCHEIBEN FÜR SOLCHE HANDWERKZEUGMASCHINE**
HAND MACHINE TOOL COMPRISING TWO CUTTING DISKS, WHICH ROTATE COUNTER AND IMMEDIATELY ADJACENT TO ONE ANOTHER, AND MEANS FOR CHUCKING THE CUTTING DISKS FOR A HAND MACHINE TOOL OF THIS TYPE
MACHINE-OUTIL PORTATIVE COMPORTANT DEUX MEULES DE DECOUPAGE TOURNANT EN SENS CONTRAIRE DIRECTEMENT DE MANIERE ADJACENTE ET DES ELEMENTS POUR MONTER LES MEULES DE DECOUPAGE POUR UNE TELLE MACHINE-OUTIL PORTATIVE

(30) Priorität: 02.12.2000 DE 10059976
(43) Veröffentlichungstag der Anmeldung: 10.09.2003
(73) Patentinhaber: ROBERT BOSCH GMBH, 70442 Stuttgart (DE)
(72) Erfinder: HOFMANN, Albrecht, 71144 Steinenbronn (DE); KRONDORFER, Harald, 71638 Ludwigsburg (DE); SCHOMISCH, Thomas, 70771 Leinfelden-Echterdingen (DE)
(86) Internationale Anmeldenummer: PCT/DE2001/003447
(87) Internationale Veröffentlichungsnummer: WO 2002/043910

(56) Entgegenhaltungen:
- WO-A-99/41044
- DE-U- 29 813 230
- DE-U- 29 820 693
- FR-A- 2 192 483
- PATENT ABSTRACTS OF JAPAN vol. 1998, no. 10, 31. August 1998 (1998-08-31) -& JP 10 118838 A (REX IND CO LTD), 12. Mai 1998 (1998-05-12)

## Beschreibung

### Stand der Technik

Die Erfindung geht aus von einer Handwerkzeugmaschine mit zwei unmittelbar aneinander vorbeidrehenden, gegenläufig rotierenden Trennscheiben, insbesondere Kreissägeblättern, der im Oberbegriff des Anspruchs 1 definierten Gattung (Siehe 2-B. DE-U-298 13 230).

Bei einer bekannten Handwerkzeugmaschine dieser Art (DE 298 04 220 U1) ist die formschlüssige Drehmitnahme der Trennscheiben durch die Anlageflansche der Werkzeugaufnahme durch ein Bajonettsystem gewährleistet, das für jede Trennscheibe drei um gleiche Umfangswinkel in der Scheibenfläche ausgebildete, schlüssellochartige Halteöffnungen und für jeden Anlageflansch drei um gleiche Umfangswinkel versetzt an dem Anlageflansch abstehende Halteelemente mit einem senkkopfartigen Halteabschnitt umfaßt. Die Aufspannmittel weisen auf den Halteelementen sitzende Druckfedern auf, die sich zwischen dem Anlageflansch und dem relativ zum Anlageflansch axial beweglichen Halteelementen abstützen. Die jeweilige Trennscheibe wird so auf den Anlageflansch aufgesetzt, daß der durchmessergrößere Teil der drei Halteöffnungen über die senkkopfartigen Halteabschnitte der Halteelemente hinweggleitet, und wird dann gegenüber dem Anlageflansch in Arbeitsdrehrichtung der Trennscheibe gedreht, wobei der schmalere Teil der Halteöffnungen unter die senkkopfartigen Halteabschnitte gelangt und die Trennscheibe von der Druckfeder an den Halteabschnitt angepreßt wird.

Ein solches Bajonettsystem ermöglicht zwar eine werkzeuglose Montage der Trennscheibe, ist aber empfindlich gegen Verschmutzung, z.B. durch Metallspäne, die aus dem Sägeprozeß herrühren. Zudem benötigt diese Werkzeugaufnahme einen großen Bauraum in Achsrichtung, der nur durch Verringerung der Lagerabstände an den Antriebsspindeln geschaffen werden kann. Dabei muß aber eine geringere Stabilität und eine höhere Lagerbelastung in Kauf genommen werden.

### Vorteile der Erfindung

Die erfindungsgemäße Handwerkzeugmaschine ist im Anspruch 1 definiert und hat den Vorteil eines einfachen Aufbaus der Werkzeugaufnahme mit hoher Funktionssicherheit und geringem Platzbedarf, bei der das Wechseln der Trennscheibe ohne Hilfswerlczeug durchgeführt werden kann. Nach Auflegen der einen Trennscheibe auf den mit der äußeren Antriebsspindel fest verbundenen ersten Anlageflansch wird die zweite Trennscheibe auf die erste Trennscheibe aufgelegt und darauf der andere Anlageflansch, aufgesetzt, der die zweite Trennscheibe zentriert und den Formschluß zu ihrer Drehmitnahme herstellt. Dann wird das Schraubteil von Hand handfest in die innere Antriebsspindel eingeschraubt, wobei der zweite Anlageflansch sich axial an der inneren Antriebsspindel abstützt. Nunmehr wird das Klemmteil manuell aktiviert, das eine erhöhte axiale Anpreßkraft auf dem zweiten Anlageflansch aufbringt und damit das Schraubteil im Gewinde der inneren Antriebsspindel vorspannt, wodurch eine vibrationsfeste, betriebssichere Verschraubung gewährleistet ist.

Diese konstruktive Ausführung hat ferner den Vorteil, daß der Spannhebel für zwei Funktionen genutzt wird. In seiner vom Anlageflansch rechtwinklig abstehenden Position dient er als Handgriff zum Einschrauben des Gewindebolzens und in seiner auf den Anlageflansch aufgeschwenkten Anlagestellung erzeugt er eine ausreichend große Klemmkraft, die ein Lösen der Werkzeugaufnahme beim Arbeiten mit der Handwerkzeugmaschine zuverlässig ausschließt. Durch die in den weiteren Ansprüchen aufgeführten Maßnahmen sind vorteilhafte Weiterbildungen und Verbesserungen der im Anspruch 1 angegebenen Handwerkzeugmaschine möglich.

Gemäß einer vorteilhaften Ausführungsform der Erfindung ist zwischen der Spannscheibe und dem zweiten Anlageflansch eine Tellerfeder angeordnet, die beim Festspannen axiale Toleranzen ausgleicht.

Gemäß einer bevorzugten Ausführungsform der Erfindung hat der Spannhebel eine halbkreisförmige Kontur, deren Durchmesser kleiner als der äußere Durchmesser des zweiten Anlageflansches ist. Dadurch ist einerseits gewährleistet, daß der auf die Außenseite des Anlageflansches abgeschwenkte Spannhebel innerhalb der Kontur des Flansches bleibt und andererseits in aufrechter Position, in welcher er in der Achse des Gewindebolzens verläuft, vergleichbar.einer Flügelschraube gut gegriffen und damit der Gewindebolzen ergonomisch günstig eingedreht werden kann.

Gemäß einer vorteilhaften Ausführungsform der Erfindung hat der zweite Anlageflansch auf seiner dem Spannhebel zugekehrten Außenfläche einen über den auf die Außenfläche aufgelegten Spannhebel überstehenden, konzentrischen Schutzkragen mit einem gegenüber dem Durchmesser der Halbkreiskontur des Spannhebels größeren Durchmesser. Dieser Schutzkragen ist an mindestens zwei diametralen Stellen ausgespart, damit der auf die Außenfläche umgelegte Spannhebel gut gegriffen werden kann. Vorzugsweise besteht der Schutzkragen aus einzelnen voneinander beabstandeten Höckern, so daß sich zwischen den Höckern genügend Platz zum Zugriff auf den Spannhebel ergibt. Durch diesen geringfügig über den umgelegten Spannhebel hinausragenden Schutzkragen kann beim Ablegen der Handwerkzeugmaschine der mit der inneren Antriebsspindel umlaufende, angeklappte Spannhebel, der sich noch im Auslaufen befindet, nicht an der Ablagefläche anschlagen und auch sonst nicht beschädigt werden.

Gemäß einer alternativen Ausführungsform der Erfindung ist die Spannscheibe als asymmetrisches Tiefziehteil mit einer erhabenen Halbkreisfläche ausgebildet, die die vom auf die Außenfläche des Anlageflansch aufgeschwenkten Spannhebel nicht belegte Flanschfläche mit dem aufgeschwenkten Spannhebel bündig überdeckt. Eine solche konstruktive Gestaltung gewährleistet neben dem Schutz des Spannhebels beim Ablegen der Handwerkzeugmaschine mit noch rotierenden Trennscheiben auf eine Ablagefläche zusätzlich einen Schutz für den Klemmhebel gegen aus axialer Richtung auf die rotierende Werkzeugaufnahme stoßende Objekte, die an der Halbkreisfläche anstoßen und somit nicht am rotierenden Spannhebel einhaken können.

Gemäß einer vorteilhaften Ausführungsform der Erfindung weist der Exzenternocken zwei etwa um 90° Umfangswinkel zueinander versetzte ebene Spannflächen auf, die so ausgebildet sind, daß der Spannhebel über den Exzenternocken in seiner längs der Gewindebolzenachse ausgerichteten Stellung und in seiner auf der Außenfläche des Anlageflansch aufliegenden Abschwenkstellung stabil an der Spannscheibe einrastet, so daß diese beiden Gebrauchsstellung des Spannhebels exakt definiert sind und nur mit Kraftaufwand überdrückt werden können.

Gemäß einer vorteilhaften Ausführungsform der Erfindung ist zwischen der inneren Antriebsspindel und der Topfinnenwand eines mit der äußeren Antriebsspindel fest verbundenen, den ersten Anlageflansch tragenden Lagertopfes ein Radiallager befestigt, an dem die innere Antriebsspindel mit einer Anlageschulter anliegt. Damit ist der gegenseitige axiale Abstand der beiden Antriebsspindeln und der beiden Anlageflansche festgelegt und der axiale Spalt zwischen den beiden gegenläufig drehenden Trennscheiben definiert.

### Zeichnung

Die Erfindung ist anhand von in der Zeichnung dargestellten Ausführungsbeispielen in der nachfolgenden Beschreibung näher erläutert. Es zeigen in teilweise schematischer Darstellung:
- Fig. 1: eine Seitenansicht einer Handwerkzeugmaschine mit zwei gegenläufig rotierenden Trennscheiben, im Bereich einer Werkzeugaufnahme für die Trennscheiben geschnitten,
- Fig. 2: eine Draufsicht des äußeren Anlageflansch der Werkzeugaufnahme in Fig. 2,
- Fig. 3: ausschnittweise einen Schnitt längs der Linie III - III in Fig. 1 bei entfernten Trennscheiben,
- Fig. 4: eine vergrößerte Darstellung des Schnittbilds der Werkzeugaufnahme in Fig. 3,
- Fig. 5: eine gleiche Darstellung wie in Fig. 3 mit einer modifizierten Werkzeugaufnahme.

### Beschreibung der Ausführungsbeispiele

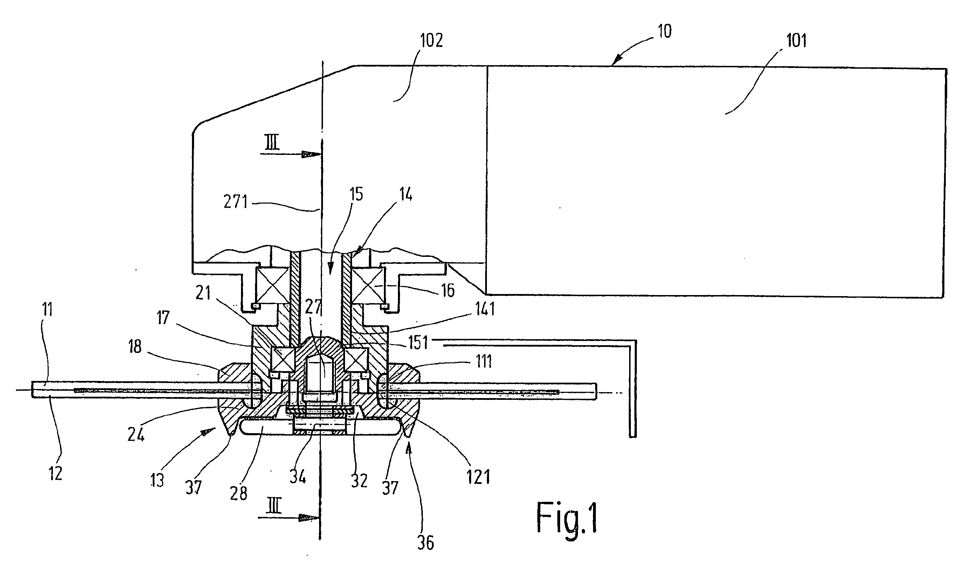

Die in Fig. 1 im Längsschnitt ausschnittweise dargestellte Handwerkzeugmaschine mit zwei gegenläufig rotierenden, aneinander vorbeidrehenden Trennscheiben 11, 12, weist ein Maschinengehäuse 10 auf, das in ein Motorgehäuse 101 und ein daran angeflanschtes Getriebegehäuse 102 unterteilt ist. Im Motorgehäuse 101 ist ein die Trennscheiben 11, 12 antreibender Elektromotor aufgenommen, dessen Abtriebswelle in Richtung der Gehäuselängsachse verläuft, und im Getriebegehäuse 102 ist ein Winkelgetriebe 14 angeordnet, das die Rotationsbewegung der Abtriebswelle auf die Trennscheiben 11, 12, deren Scheibenachse rechtwinklig zur Achse der Abtriebswelle ausgerichtet sind, überträgt, und zwar derart, daß die beiden Trennscheiben 11, 12 gegenläufig rotieren. Im Ausführungsbeispiel der Fig. 1 ist die Handwerkzeugmaschine als Handsäge ausgeführt und die Trennscheiben 11, 12 werden von zwei Kreissägeblätter gebildet. Zur Verwendung der Handwerkzeugmaschine als Trennschleifer werden als Trennscheiben 11, 12 die bei Winkelschleifern üblichen Schleifblätter eingesetzt.

Jede Trennscheibe 11, 12 ist über eine Werkzeugaufnahme 13 mit einer von zwei konzentrisch angeordneten Antriebsspindeln 14, 15 drehfest verbunden. Dabei ist die hohl ausgebildete äußere Antriebsspindel 14 in zwei voneinander beabstandeten Radiallagern, von denen in Fig. 1 nur das untere Radiallager 16 zu sehen ist, im Getriebegehäuse 102 gelagert, während die innere Antriebsspindel 15 durch Radiallager an der äußeren Antriebsspindel 14 abgestützt ist. Die beiden Antriebsspindeln 14, 15 ragen endseitig aus dem Getriebegehäuse 102 hervor. Auf die Vorstehenden 141 und 151 ist die Werkzeugaufnahme 13 für die Trennscheiben 11, 12 aufgesetzt.

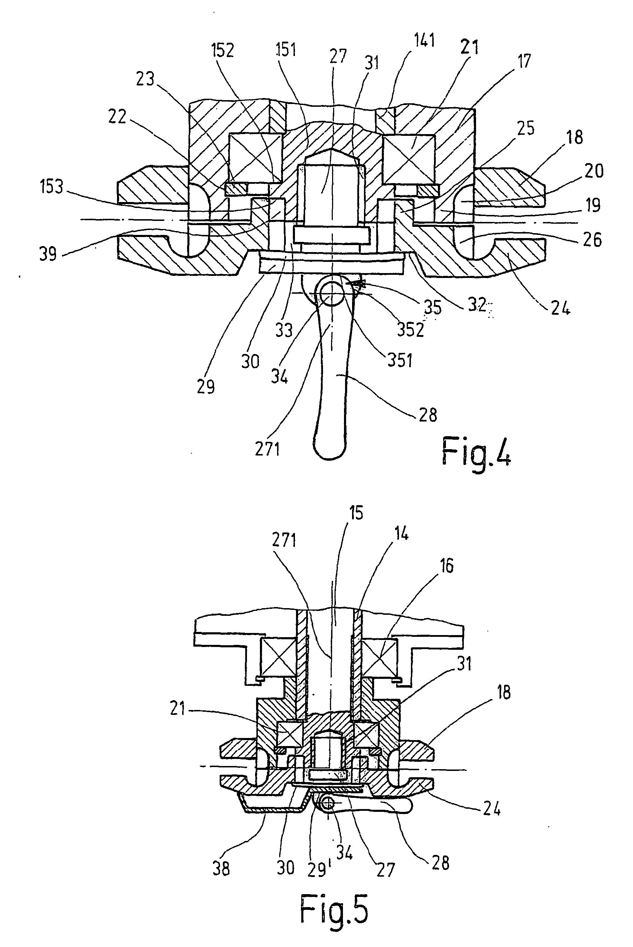

Die Werkzeugaufnahme 13 weist einen auf dem Vorstehende 141 der äußeren Antriebsspindel 14 drehfest, z.B. durch Preßsitz, aufsitzenden Lagertopf 17 auf, der mit einem ersten Anlageflansch 18 und an seinem Stirnende mit einem Zentrierbund 19 zum Aufnehmen der Trennscheibe 11 sowie mit einer Verzahnung 20 versehen ist. Zentrierbund 19 und Verzahnung 20 sind in der vergrößerten Darstellung der Fig. 4 gut zu erkennen. Die Verzahnung 20 greift bei auf den Anlageflansch 18 aufgelegter Trennscheibe 11 in eine in der Trennscheibe 11 ausgebildete, konzentrisch zur Scheibenachse umlaufende Verzahnung 111 (Fig. 1) ein, so daß der von der Antriebsspindel 14 angetriebene Lagertopf 17 bei seiner Rotation die Trennscheibe 11 formschlüssig mitnimmt. Zwischen der inneren Antriebsspindel 15 und der Topfinnenwand des Lagertopfs 17 ist ein am Topfboden sich abstützendes Radiallager 21 befestigt, an dem die innere Antriebsspindel 15 mit einer ringförmigen Anlageschulter 152 anliegt. Die Befestigung des Radiallagers 21 im Lagertopf 17 erfolgt mittels Preßsitz oder - wie in Fig. 4 deutlicher zu sehen ist - mittels eines in einer Ringnut 22 in der Topfinnenwand einliegenden, das Radiallager 21 übergreifenden Sicherungsrings 23. Durch das Radiallager 21 wird gleichzeitig eine direkte axiale Festlegung der beiden Antriebsspindeln 14, 15 zueinander bewirkt.

Zur Werkzeugaufnahme 13 gehört noch ein zweiter Anlageflansch 24, der durch Aufspannmittel auf die innere Antriebsspindel 15 aufspannbar ist, wobei gleichzeitig die Trennscheibe 11 über die Trennscheibe 12 in formschlüssigem Eingriff mit dem ersten Anlageflansch 18 gehalten wird. Auf seiner dem ersten Anlageflansch 18 zugekehrten Innenfläche trägt der zweite Anlageflansch 24 eine Verzahnung 26, die mit einer an der Scheibenfläche der Trennscheibe 12 konzentrisch zur Scheibenachse ausgebildeten Verzahnung 121 (Fig. 1) zur formschlüssigen Drehmitnahme der Trennscheibe 12 durch den zweiten Anlageflansch 24 zusammenwirkt und mit ihrer Außenkontur die Trennscheibe 12 zentriert. Außerdem ist zwischen dem zweiten Anlageflansch 24 und dem Vorstehende 151 der inneren Antriebsspindel 15 eine Profilverzahnung 39 vorhanden, die eine Drehmitnahme des zweiten Anlageflansches 24 durch die innere Antriebsspindel 15 sicherstellt. Der zweite Anlageflansch 24 stützt sich am Grunde der Profilverzahnung 39 axial an einer an der inneren Antriebsspindel 15 ausgebildeten Radialschulter 125 ab.

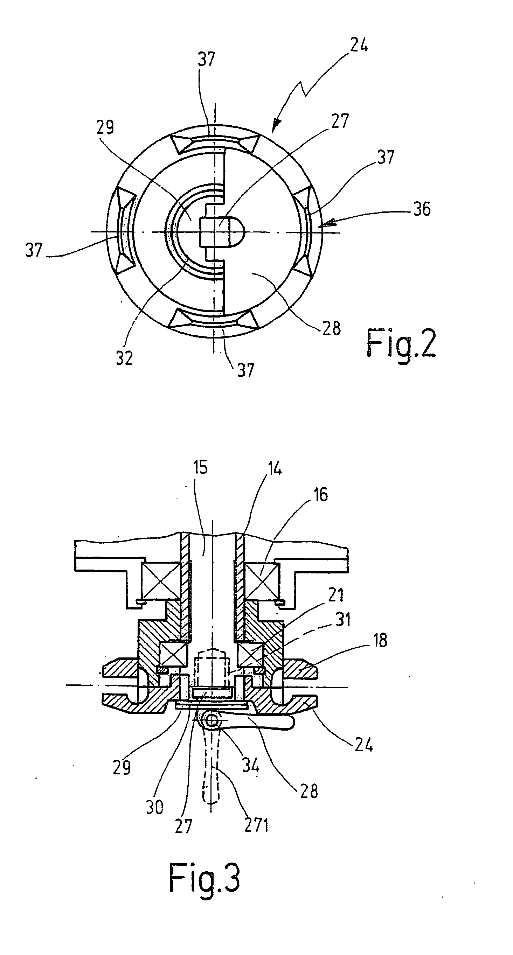

Die Aufspannmittel weisen einen Gewindebolzen 27, einen am Bolzenkopf schwenkbar festgelegten Spannhebel 28, eine konzentrisch zum Gewindebolzen 27 angeordnete Spannscheibe 29 und eine zwischen der Spannscheibe 29 und der von der Trennscheibe 11 abgekehrten Außenfläche des zweiten Anlageflansches 24 angeordnete Tellerfeder 30 auf. Der Gewindebolzen 24 ist mit seinem Gewindeabschnitt in ein Innengewinde 31 in der inneren Antriebsspindel 15 einschraubbar, das von der Stirnseite der inneren Antriebsspindel 15 aus eingeschnitten ist. Dabei wird der Gewindebolzen 27 durch eine zentrale Öffnung 33 im zweiten Anlageflansch 24 hindurchgeführt, die koaxial in eine Vertiefung 32 in der von der Trennscheibe 12 abgekehrten äußeren Flanschfläche des zweiten Anlageflansches 24 liegt. Die Vertiefung 32 nimmt bei durch die zentrale Öffnung 33 hindurchgestecktem Gewindebolzen 27 die Tellerfeder 30 und die Spannscheibe 29 auf, wobei sich die Tellerfeder 30 am Grunde der Vertiefung 32 abstützt. Der Spannhebel 28 ist mittels eines den Bolzenkopf des Gewindebolzens 27 durchdringenden Stiftes 34 schwenkbar am Gewindebolzen %7 gehalten. Der Spannhebel 28 weist eine halbkreisförmige Kontur auf (Fig. 2), deren Durchmesser kleiner als der äußere Durchmesser des zweiten Anlageflansches 24 ist. Durch diese Halbkreisform ist gewährleistet, daß der auf die äußere Flanschfläche abgeschwenkte Spannhebel 28 innerhalb der Kontur des Anlageflansches 24 liegt. Wie insbesondere in Fig. 4 zu sehen ist, ist am Spannhebel 28 ein Exzenternocken 35 ausgebildet, der vorzugsweise einstückig mit den Spannhebel 28 ist. Der nahe dem Stift 34 angeordnete Exzenternocken 35 hat eine solche Formgebung, daß er beim Abschwenken des Spannhebels 28 aus einer in Richtung der Gewindebolzenachse 272 weisenden Position auf die Spannscheibe 29 aufläuft und auf diese eine Anpreßkraft ausübt.

Zum Einsetzen der Trennscheiben 11, 12 in die Werkzeugaufnahme 13 ist zunächst die Trennscheibe 11 auf den ersten Anlageflansch 18 aufzusetzen, wobei sie durch den Zentrierbund 19 zentriert wird. Dann wird die zweite Trennscheibe 12 auf die erste Trennscheibe 11 aufgelegt und darauf der zweite Anlageflansch 24 aufgesetzt. Der zweite Anlageflansch 24 zentriert mit der Außenkontur seiner Profilverzahnung 26 die zweite Trennscheibe 12 und rastet mit der Profilverzahnung 26 in die Verzahnung 121 der Trennscheibe 12 ein und wird mit dem an ihm ausgebildeten Teil der Profilverzahnung 39 auf den an der inneren Antriebsspindel 15 ausgebildeten Teil der Profilverzahnung 39 aufgeschoben. Nunmehr wird der die Spannscheibe 29 und die Tellerfeder 30 tragende Gewindebolzen 27 durch die zentrale Öffnung 33 in dem zweiten Anlageflansch 24 hindurchgesteckt und in dem Innengewinde 31 in der inneren Antriebsspindel 15 von Hand verschraubt, wobei der in seiner Position gemäß Fig. 4 stehende Spannhebel 28 als Handgriff dient. Der Gewindebolzen 27 wird handfest in das Innengewinde 15 eingeschraubt, wobei der zweite Anlageflansch 24 am Grunde der Profilverzahnung 39 axial gegen die innere Antriebsspindel 15 angepreßt wird. Da das handfeste Einschrauben nicht ausreicht, um eine vibrationsfeste, betriebssichere Verschraubung zu gewährleisten, wird nunmehr der Spannhebel 28 flach auf die Außenfläche des zweiten Anlageflansches 24 umgelegt, wobei sein Exzenternocken 35 über die Spannscheibe 29 und die Tellerfeder 30 den zweiten Anlageflansch 18 gegen den Gewindebolzen 27 verspannt und damit fest auf die innere Antriebsspindel 15 aufspannt.

Wie in Fig. 4 verdeutlicht ist, verfügt der Exzenternocken 35 über zwei etwa um 90° zueinander versetzte, ebene Spannflächen 351, 352 die so ausgebildet sind, daß der Spannhebel 28 über jede dieser Spannflächen 351, 352 in seinen in Fig. 4 und in Fig. 3 ausgezogen dargestellten Schwenkpositionen jeweils an der Spannscheibe 29 verrastet, wobei das Rastrnoment so groß ist, daß der Spannhebel 28 nur mit einem definierten Kraftaufwand aus der Raststellung ausgeschwenkt werden kann. Damit ist der Spannhebel 28 zuverlässig in der jeweiligen Schwenkposition gehalten und kann auch beim Arbeiten mit der Handwerkzeugmaschine nicht selbsttätig vom Anlageflansch 24 abschwenken.

Zum Schütze des mit der inneren Antriebsspindel 15 umlaufenden Spannhebels 28 beim Ablegen der Handwerkzeugmaschine mit noch auslaufenden Trennscheiben 11, 12 auf eine Ablagefläche ist auf der äußeren Flanschfläche des zweiten Anlageflansches 24 ein konzentrischer Schutzkragen 36 angeordnet, dessen Durchmesser größer gewählt ist als der Durchmesser des auf die äußere Flanschfläche abgeschwenkten halbkreisförmigen Spannhebels 28. Dieser Schutzkragen 36 ist an mindesten zwei diametralen Stellen ausgespart, damit durch den Schutzkragen 36 hindurch der abgeschwenkte Spannhebel 28 gegriffen werden kann. In dem beschriebenen Ausführungsbeispiel der Handwerkzeugmaschine ist - wie Fig. 2 zeigt - dieser Schutzkragen 36 durch mehrere, hier vier, gleichmäßig voneinander beabstandete Höcker 37 realisiert. Der Schutzkragen 36 bzw. die Höcker 37 stehen - wie Fig. 1 zeigt - etwas über den auf die äußere Flanschfläche des zweiten Anlageflansches 24 abgeschwenkten Spannhebel 28 über, so daß beim Auflegen der Handwerkzeugmaschine im Bereich der Werkzeugaufnahine 13 auf eine Abstellfläche der Schutzkragen 36 bzw. die Höcker 37 auf der Abstellfläche aufliegen und der auf den Anlageflansch 24 aufgeschwenkte Spannhebel 28 darunter ohne Behinderung weiterdrehen kann.

In Fig. 5 ist eine Modifizierung der Werkzeugaufnahme 13 dargestellt. Hier ist zusätzlich die Spannscheibe 29' als

In Fig. 5 ist eine Modifizierung der Werkzeugaufnahme 13 dargestellt. Hier ist zusätzlich die Spannscheibe 29' als asymmetrisches Tiefziehteil mit einer erhabenen Halbkreisfläche 38 ausgebildet. Die Spannscheibe 29' ist dabei vor Spannen der Werkzeugaufnahme 13 so auf die Außenfläche des zweiten Anlageflansches 24 aufgesetzt, daß die erhabene Halbkreisfläche 38 die vom auf die äußere Flanschfläche aufgeschwenkten Spannhebel 28 nicht belegte Flanschfläche überdeckt. Damit ist gewährleistet, daß der rotierende Spannhebel 28 sich nicht an einem Objekt einhaken kann, welches aus axialer Richtung auf den rotierenden Spannhebel 28 stößt. Zudem ist eine geringeres Verletzungsrisiko für den Benutzer gegeben, der versehentlich beim Lauf der Handwerkzeugmaschine auf die Fläche des Spannhebels 28 greift, da der umgelegte Spannhebel 28 durch die Formgebung der Spannscheibe 29 mit der erhabenen Halbkreisfläche 38 eine nahezu ebene Fläche bildet.

## Patentansprüche

1. Handwerkzeugmaschine mit zwei unmittelbar aneinander vorbeidrehenden, gegenläufig rotierenden Trennscheiben (11, 12), insbesondere Kreissägeblättern, die von zwei konzentrisch zueinander angeordneten Antriebsspindeln (14, 15) antreibbar sind, und mit einer Werkzeugaufnahme (13) für die Trennscheiben (11, 12), die einen mit der hohlen äußeren Antriebsspindel (14) drehfest verbundenen ersten Anlageflansch (18) und einen mit der inneren Antriebsspindel (15) drehfest verbindbaren zweiten Anlageflansch (24) zur zentrierten Anlage und formschlüssigen Drehmitnahme der Trennscheiben (11, 12) sowie Aufspannmittel zum Sichern des Formschlusses zwischen Trennscheiben (11, 12) und Anlageflanschen (18, 24) aufweist, **dadurch gekennzeichnet, dass** die Aufspannmittel ein den zweiten Anlageflansch (24) aufnehmendes, stirnseitig in die innere Antriebsspindel (15) werkaeuglos einschraubbares Schraubteil und ein werkzeuglos betätigbares, den zweiten Anlageflansch (24) axial gegen die innere Antriebsspindel (15) pressendes Klemmteil aufweisen, das den zweiten Anlageflansch (24) gegen das Schraubteil verspannt, wobei das Schraubteil ein Gewindebolzen (27) mit einer darauf lose sitzenden Spannscheibe (29) und der Klemmteil ein am Gewindebolzen (27) schwenkbar festgelegter Spannhebel (28) mit einem daran vorzugsweise einstückig ausgebildeten Exzenternocken (35) ist, der eine solche Form aufweist, dass er beim Abschwenken des Spannhebels (28) aus einer in Richtung der Gewiadebolzenachse (271) weisenden Position heraus auf die am zweiten Anlageflansch (24) sich abstützende Spannscheibe (29) eine Klemmkraft erzeugend aufläuft.

2. Handwerkzeugmaschine nach Anspruch 1, **dadurch gekennzeichnet, daß** zwischen der Spannscheibe (29) und dem zweiten Anlageflansch (24) eine Tellerfeder (30) angeordnet ist.

3. Handwerkzeugmaschine nach Anspruch 1 oder 2, **dadurch gekennzeichnet, daß** der Spannhebel (28) eine halbkreisförmige Kontur aufweist, deren Durchmesser kleiner ist als der äußere Durchmesser des zweiten Anlageflansches (24).

4. Handwerkzeugmaschine nach Anspruch 3, **dadurch gekennzeichnet, daß** der zweite Anlageflansch (24) auf seiner dem Spannhebel (28) zugekehrten Außenfläche einen über den auf der Außenfläche aufliegenden Spannhebel (28) überstehenden, konzentrischen Schutzkragen (36) mit einem gegenüber dem Durchmesser der Halkreiskontur des Spannhebels (28) größeren Durchmesser trägt, der an mindesten zwei diametralen Stellen ausgespart ist, und vorzugsweise daß der Schutzkragen (36) in einzelne, voneinander beabstandete Höcker (37) unterteilt ist.

5. Handwerkzeugmaschine nach Anspruch 3 oder 4, **dadurch gekennzeichnet, daß** die Spannscheibe (29') als asymmetrisches Tiefziehteil mit einer erhabenen Halbkreisfläche (38) ausgebildet ist, welche die vom auf der Außenfläche des zweiten Anlageflansches (24) aufliegenden Spannhebel (28) nicht belegte Flanschfläche überdeckt, und vorzugsweise daß die Außenseite der Halbhreisfläche und die Außenseite des -auf der Außenfläche des zweiten Lagerflansches (24) aufliegenden Spannhebels (28) bündig sind.

6. Handwerkzeugmaschine nach einem der Ansprüche 1 - 5, **dadurch gekennzeichnet, daß** der Exzenternocken (35) zwei etwa um 90° Umfangswinkel zueinander versetzte, ebene Spannflächen (351, 352) aufweist, die so ausgebildet sind, daß der Spannhebel (28) über den Exzenternocken (35) in seiner längs der Gewindebolzenachse (271) ausgerichteten Schraubstellung und in seiner auf der Außenfläche des zweiten Anlageflansches (24) aufliegenden Abschwenkstellung an der Spannscheibe (29, 29') verrastet.

7. Handwerkzeugmaschine nach einem der Ansprüche 1 - 6, **dadurch gekennzeichnet, daß** der an der inneren Antriebsspindel (15) sich axial abstützende zweite Anlageflansch (24) mit einem an ihm ausgebildeten Teil einer Verzahnung (39) in den an der inneren Antriebsspindel (15) ausgebildeten anderen Teil der Verzahnung (39) formschlüssig eingreift und mit einer weiteren an ihm ausgebildeten Verzahnung (26) in eine in der Scheibenfläche der Trennscheibe (12) konzentrisch ausgebildete Verzahnung (121) formschlüssig und die Trennscheibe (12) zugleich zentrierend eingreift.

8. Handwerkzeugmaschine nach einem der Ansprüche 1 - 7, **dadurch gekennzeichnet, daß** die Werkzeugaufnahme (13) einen auf dem freien Ende der äußeren .Antriebsspindel (14) drehfest aufsitzenden Lagertopf (17) aufweist, an dem der erste Anlageflansch (18) angeordnet ist und der an seinem Stirnende eine Zentrierbund (19) zum Aufnehmen der Trennscheibe (11) und eine Verzahnung (20) aufweist, die formschlüssig in eine an der Scheibenfläche der Trennscheibe (11) konzentrisch ausgebildete Verzahnung (111) eingreift.

9. Handwerkzeugmaschine nach Anspruch 8, **dadurch gekennzeichnet, daß** zwischen der inneren Antriebsspindel (15) und der Topfinnenwand ein am Topfboden sich abstützendes Radiallager (16), z.B. durch Preßsitz oder Sicherungsring (23), befestigt ist, und daß die innere Antriebsspindel (15) mit einer Anschlagschulter (152) an dem Radiallager (16) axial anliegt.

## Claims

1. Powered hand tool having two cut-off discs (11, 12), in particular circular saw blades, which rotate directly past one another in opposite directions and can be driven by two drive spindles (14, 15) arranged concentrically to one another, and having a tool receptacle (13) for the cut-off discs (11, 12) which has a first locating flange (18) connected to the hollow outer drive spindle (14) in a rotationally fixed manner, and a second locating flange (24) which can be connected to the inner drive spindle (15) in a rotationally fixed manner and is intended for the centred locating and positive-locking rotary driving of the cut-off discs (11, 12), and mounting means for securing the positive locking between cut-off discs (11, 12) and locating flanges (18, 24), **characterized in that** the mounting means has a screw part, which accommodates the second locating flange (24) and can be screwed at the end face into the inner drive spindle (15) without the use of a tool, and a clamping part which can be actuated without the use of a tool, presses the second locating flange (24) axially against the inner drive spindle (15) and restrains the second locating flange (24) against the screw part, the screw part being a stud bolt (27) having a clamping disc (29) sitting loosely thereon, and the clamping part being a clamping lever (28) which is pivotably secured to the stud bolt (27) and has an eccentric lobe (35), which is preferably of one-piece design and has a such a shape that, when the clamping lever (28) is swung to the side out of a position pointing in the direction of the stud bolt axis (271), it runs onto the clamping disc (29), supported on the second locating flange (24), in such a way as to produce a clamping force.

2. Powered hand tool according to Claim 1, **characterized in that** a disc spring (30) is arranged between the clamping disc (29) and the second locating flange (24).

3. Powered hand tool according to Claim 1 or 2, **characterized in that** the clamping lever (28) has a semicircular contour, the diameter of which is smaller than the outer diameter of the second locating flange (24).

4. Powered hand tool according to Claim 3, **characterized in that** the second locating flange (24), on its outer surface facing the clamping lever (28), has a concentric protective collar (36) which projects beyond the clamping lever (28) resting on the outer surface, has a diameter larger than the diameter of the semicircular contour of the clamping lever (28) and is recessed at at least two opposite locations, and preferably **in that** the protective collar (36) is subdivided into individual spaced-apart humps (37).

5. Powered hand tool according to Claim 3 or 4, **characterized in that** the clamping disc (29') is designed as an asymmetrical deep-drawn part having a raised semicircular surface (38) which covers the flange surface not occupied by the clamping lever (28) resting on the outer surface of the second locating flange (24), and preferably **in that** the outside of the semicircular surface and the outside of the clamping lever (28) resting on the outer surface of the second locating flange (24) are flush.

6. Powered hand tool according to one of Claims 1 to 5, **characterized in that** the eccentric lobe (35) has two flat clamping surfaces (351, 352) which are offset from one another by a circumferential angle of approximately 90° and are designed in such a way that the clamping lever (28), via the eccentric lobe (35), latches on the clamping disc (29, 29') in its screwed position oriented along the stud bolt axis (271) and in its swung-aside position resting on the outer surface of the second locating flange (24).

7. Powered hand tool according to one of Claims 1 to 6, **characterized in that** the second locating flange (24) axially supported on the inner drive spindle (15), with one part of a tooth system (39), this part being formed on it, engages in a positive-locking manner in the other part of the tooth system (39), this other part being formed on the inner drive spindle (15), and, with a further tooth system (26) formed on it, engages in a positive-locking manner in a tooth system (121) concentrically formed in the disc surface of the cut-off disc (12), and engages in said tooth system (121) in such a way as to centre the cut-off disc at the same time (12).

8. Powered hand tool according to one of Claims 1 to 7, **characterized in that** the tool receptacle (13) has a bearing pot (17) which sits in a rotationally fixed manner on the free end of the outer drive spindle (14) and on which the first locating flange (18) is arranged and which has, at its end face, a centring collar (19) for accommodating the cut-off disc (11) and a tooth system (20) which engages in a positive-locking manner in a tooth system (111) concentrically formed on the disc surface of the cut-off disc (11).

9. Powered hand tool according to Claim 8, **characterized in that** a radial bearing (21) supported on the pot base is fastened between the inner drive spindle (15) and the pot inner wall, e.g. by an interference fit or a circlip (23), and **in that** the inner drive spindle (15) axially bears with a stop shoulder (152) against the radial bearing (21).

## Revendications

1. Machine-outil manuelle comportant :
- deux meules de tronçonnage rotatives (11, 12), en particulier des lames de scie circulaire, tournant en sens contraire en passant l'une directement à côté de l'autre, et entraînées par deux broches d'entraînement (14, 15) concentriques, et
- un logement d'outil (13) pour les meules de tronçonnage (11, 12) qui présente une première bride de position (18) solidaire en rotation avec la broche d'entraînement extérieure (14) creuse et une deuxième bride de positionnement (24) pouvant être reliée de manière solidaire en rotation avec la broche d'entraînement intérieure (15) pour le centrage du positionnement et la liaison par complémentarité de formes de l'entraînement en rotation des meules de tronçonnage (11, 12), ainsi que des moyens de serrage pour bloquer la liaison par complémentarité de formes entre les meules de tronçonnage (11, 12) et les brides de positionnement (18, 24),
**caractérisée en ce que**
les moyens de serrage présentent un élément fileté recevant la deuxième bride de positionnement (24) et pouvant être vissé sans outil sur le côté frontal de la broche d'entraînement (15) intérieure, et un élément de serrage pouvant être actionné sans outil qui presse la deuxième bride de positionnement (24) axialement contre la broche intérieure (15) et serre la deuxième bride de positionnement (24) contre l'élément fileté, l'élément fileté étant un boulon fileté (27) avec un disque de serrage (29) mobile sur celui-ci, et l'élément de serrage étant un levier de serrage (28) fixé pivotant sur le boulon fileté (27) et muni d'une came excentrique (35) formée sur celui-ci de préférence d'une seule pièce et qui présente une forme telle que, lors d'un pivotement du levier de serrage (28), elle exerce une force de serrage sur le disque de serrage (29) appuyé sur la deuxième bride de positionnement (24) depuis une position orientée en direction de l'axe de boulon fileté (271).

2. Machine-outil manuelle selon la revendication 1,
**caractérisée par**
une rondelle Belleville (30) entre le disque de serrage (29) et la deuxième bride de positionnement (24).

3. Machine-outil manuelle selon la revendication 1 ou 2,
**caractérisée en ce que**
le levier de serrage (28) présente un contour en demi-cercle dont le diamètre est inférieur au diamètre extérieur de la deuxième bride de positionnement (24).

4. Machine-outil manuelle selon la revendication 3,
**caractérisée en ce que**
sur sa surface extérieure tournée vers le levier de serrage (28) la deuxième bride de positionnement (24) porte un collet de protection concentrique (36) qui dépasse du levier de serrage (28) placé sur la surface extérieure avec un diamètre supérieur au diamètre du contour en demi-cercle du levier de serrage (28) et est muni d'évidements au niveau d'au moins deux emplacements diamétraux, et dans le détail le collet de protection (36) est divisé en différentes bosses (37) distancées les unes des autres.

5. Machine-outil manuelle selon la revendication 3 ou 4,
**caractérisée en ce que**
le disque de serrage (29') est une pièce emboutie asymétrique avec une surface de demi-cercle convexe (38) qui recouvre la surface de bride non occupée par le levier de serrage (28) placé sur la surface extérieure de la deuxième bride de positionnement (24), et de préférence la face extérieure de la surface de demi-cercle et la face extérieure du levier de serrage (28) placé sur la surface extérieure de la deuxième bride de positionnement (24) sont affleurantes.

6. Machine-outil manuelle selon l'une quelconque des revendications 1 à 5,
**caractérisée en ce que**
la came excentrique (35) présente deux surfaces de serrage (351, 352) planes décalées l'une par rapport à l'autre selon un angle de 90° environ et configurées afin que le levier de serrage (28) se bloque au-dessus de la came excentrique (35) dans sa position vissée orientée le long de l'axe de boulon fileté (271) et sur le disque de serrage (29, 29') dans sa position pivotée située sur la face extérieure de la deuxième bride de positionnement (24).

7. Machine-outil manuelle selon l'une quelconque des revendications 1 à 6,
**caractérisée en ce que**
la deuxième bride de positionnement (24) appuyée axialement contre la broche intérieure (15) s'engage par complémentarité de forme par une partie d'une denture (39) formée sur elle dans l'autre partie de la denture (39) formée sur la broche de commande (15) intérieure, et s'engage par complémentarité de forme par une autre denture (26) formée sur elle dans une denture (121) concentrique dans la face de meulage de la meule de tronçonnage (12) tout en centrant la meule de tronçonnage (12).

8. Machine-outil manuelle selon l'une quelconque des revendications 1 à 7,
**caractérisée en ce que**
le logement d'outil (13) présente un coussinet (17) situé immobile en rotation sur l'extrémité libre de la broche (14) extérieure, sur lequel est disposée la première bride de positionnement (18) et qui sur son extrémité frontale présente un épaulement de centrage (19) pour recevoir la meule de tronçonnage (11) ainsi qu'une denture (20) qui s'engage par complémentarité de formes dans une denture (111) concentrique sur la face de meulage de la meule de tronçonnage (11).

9. Machine-outil manuelle selon la revendication 8,
**caractérisée en ce qu'**
un roulement radial (16) prenant appui sur le fond de carter est fixé, par exemple par ajustage serré ou circlip (23), entre la broche intérieure (15) et la paroi intérieure de carter, et la broche intérieure (15) s'appuie axialement par une butée (152) contre le roulement radial (16).
